# EUROPÄISCHE PATENTSCHRIFT

(11) **EP 2 982 546 B1**
(45) Veröffentlichungstag und Bekanntmachung des Hinweises auf die Patenterteilung: **28.06.2017**
(21) Anmeldenummer: 15000545.2
(22) Anmeldetag: 25.02.2015
(51) Int. Cl.: B60R 16/03, B60R 16/033

(54) **VERFAHREN ZUR UNTERSTÜTZUNG EINES FAHRERS EINES FAHRZEUGES, INSBESONDERE EINES NUTZFAHRZEUGES, UND FAHRERASSISTENZSYSTEM**
METHOD FOR SUPPORTING A DRIVER OF A VEHICLE, IN PARTICULAR A COMMERCIAL VEHICLE, AND DRIVER ASSISTANCE SYSTEM
PROCÉDÉ D'ASSISTANCE D'UN CONDUCTEUR DE VÉHICULE, NOTAMMENT D'UN VÉHICULE UTILITAIRE ET SYSTÈME D'ASSISTANCE D'UN CONDUCTEUR

(30) Priorität: 08.08.2014 DE 102014011839
(43) Veröffentlichungstag der Anmeldung: 10.02.2016
(73) Patentinhaber: MAN Truck & Bus AG, 80995 München (DE)
(72) Erfinder: Ille, Thomas, 82223 Eichenau (DE); Venjakob, Christoph, 85221 Dachau (DE)
(74) Vertreter: Liebl, Thomas

(56) Entgegenhaltungen:
- EP-A1- 1 466 795
- WO-A1-2005/025941
- WO-A2-2010/127644
- DE-A1-102011 118 796
- DE-A1-102012 108 875
- US-A1- 2009 184 578

## Beschreibung

Die Erfindung betrifft ein Verfahren zur Unterstützung eines Fahrers eines Fahrzeuges, insbesondere eines Nutzfahrzeuges, nach dem Oberbegriff des Patentanspruches 1, ein Fahrerassistenzsystem für ein Fahrzeug, insbesondere für ein Nutzfahrzeug, nach dem Oberbegriff des Patentanspruches 8 sowie ein Fahrzeug, insbesondere ein Nutzfahrzeug, zur Durchführung des Verfahrens und/oder mit dem Fahrerassistenzsystem nach Patenanspruch 14.

Bei modernen Nutzfahrzeugen ist es bekannt, Fahrerassistenzsysteme vorzusehen, mittels denen einem Fahrer des Nutzfahrzeuges mitgeteilt werden kann, ob das abgestellte Nutzfahrzeug bzw. deren abgestellte Brennkraftmaschine zur Zeit bzw. aktuell startfähig ist oder nicht. Die Startbarkeit des Nutzfahrzeuges ist dabei unter anderem von der Temperatur einer Starter-Batterie des Nutzfahrzeuges abhängig. Bei einer höheren Temperatur der Starter-Batterie ist die Startbarkeit des Fahrzeuges im Vergleich zu einer niedrigen Temperatur der Starter-Batterie deutlich verbessert. Ein solches Fahrerassistenzsystem bzw. -verfahren ist aus der US 2009/0184578 gemäß Anspruch 8 bzw. 1 bekannt. Bei den bekannten Fahrerassistenzsystemen werden daher beispielsweise die aktuelle Temperatur der Starter-Batterie, der aktuelle Batterie-Strom und die aktuelle Batterie-Spannung gemessen und ausgehend von diesen Batterie-Parametern, beispielsweise über ein Batterie-Simulationsmodell, ermittelt, ob aktuell ein Fahrzeugstart möglich bzw. notwendig ist oder nicht. Sofern ein Fahrzeugstart nicht sinnvoll ist, wird dies dem Fahrer dann mittels eines Warnsignals mitgeteilt. Der Fahrer kann dann beispielsweise warten, bis sich die Umgebungs-Temperatur und somit auch die Temperatur der Starter-Batterie erhöht oder aber auch andere geeignete Maßnahmen einleiten. Des Weiteren werden bei der Ermittlung der Startfähigkeit des Fahrzeuges üblicherweise auch die aktuell von der Starter-Batterie abgegriffene elektrische Leistung und der zu erwartende elektrische Energiebedarf beim Starten des Fahrzeuges berücksichtigt.

Aufgabe der Erfindung ist es, ein Verfahren zur Unterstützung eines Fahrers eines Fahrzeuges, insbesondere eines Nutzfahrzeuges, und ein Fahrerassistenzsystem für ein Fahrzeug, insbesondere für ein Nutzfahrzeug, bereitzustellen, mittels denen die Unterstützung des Fahrers des Fahrzeuges auf einfache Weise erweitert und/oder verbessert wird.

Diese Aufgabe wird durch die Merkmale der unabhängigen Ansprüche gelöst. Bevorzugte Weiterbildungen sind in den Unteransprüchen offenbart.

Die Erfindung betrifft ein Verfahren zur Unterstützung eines Fahrzeuges, insbesondere eines Nutzfahrzeuges, mit einer Mess- und Steuereinrichtung, mittels der wenigstens Batterie-Parameter einer Starter-Batterie des Fahrzeuges gemessen wird, und mittels der aus den gemessenen Batterie-Parameter die Startbarkeit des Fahrzeuges ermittelt wird. Erfindungsgemäß wird bei der Ermittlung der Startbarkeit des Fahrzeuges auch die örtliche Temperatur an einem voraussichtlichen zukünftigen Fahrzeug-Startzeitpunkt an einem voraussichtlichen zukünftigen Fahrzeug-Startort berücksichtigt.

Auf diese Weise wird die Unterstützung des Fahrers deutlich erweitert bzw. verbessert, da zeitlich gesehen bereits weit vor dem voraussichtlichen Fahrzeug-Startzeitpunkt zuverlässige Aussagen über die Startbarkeit des Fahrzeugs zu dem Fahrzeug-Startzeitpunkt getroffen werden können. Auf Basis dieser Aussagen können dann geeignete Maßnahmen zur Sicherstellung der Startbarkeit an dem voraussichtlichen Fahrzeug-Startzeitpunkt deutlich früher eingeleitet werden. So kann beispielsweise bei bereits abgestelltem Fahrzeug die entladene Starter-Batterie mit einem Ladegerät gekoppelt werden, um diese wieder aufzuladen. Dadurch können auch eventuelle Batterie-Schäden vermieden werden. Ebenso kann beispielsweise der Fahrer noch während der Fahrt mit dem Fahrzeug seine Fahrweise derart ändern bzw. anpassen, dass die Starter-Batterie während der Fahrt ausreichend Ladung aufnimmt. Weiter kann der Fahrer beispielsweise auch geplante Fahrpausen hinauszögern oder früher durchführen, um das Fahrzeug im optimalen Temperaturbereich zu starten. Zudem kann beispielsweise ein Abstellen des Fahrzeuges verzögert werden, um die Starter-Batterie ausreichend zu laden. Des Weiteren kann die Mess- und Steuereinrichtung auch selbsttätig bzw. automatisch Maßnahmen einleiten, die die Startbarkeit des Fahrzeuges an dem voraussichtlichen Fahrzeug-Startzeitpunkt sicherstellen. So kann die Mess- und Steuereinrichtung beispielsweise Energieverbraucher selbsttätig deaktivieren oder selbsttätig in einen energiesparenden Betriebsmodus umschalten. Ebenso kann die Mess- und Steuereinrichtung beispielsweise bei abgestelltem Fahrzeug die Brennkraftmaschine des Fahrzeuges auch zeitlich vor dem voraussichtlichen bzw. geplanten zukünftigen Fahrzeug-Startzeitpunkt selbsttätig starten, um das Fahrzeug an dem geplanten zukünftigen Fahrzeug-Startzeitpunkt starten und/oder bewegen zu können.

Die Berücksichtigung der örtlichen Temperatur an dem voraussichtlichen zukünftigen Fahrzeug-Startzeitpunkt an dem voraussichtlichen zukünftigen Fahrzeug-Startort ist dabei eine besonders einfache Möglichkeit, zuverlässige Aussagen über die Startbarkeit des Fahrzeuges an dem voraussichtlichen zukünftigen Fahrzeug-Startzeitpunkt zu treffen.

Des Weiteren kann der voraussichtliche zukünftige Fahrzeug-Startort beispielsweise ein Ort sein, an dem sich das Fahrzeug bereits befindet. Ebenso kann der voraussichtliche zukünftige Fahrzeug-Startort beispielsweise auch ein Ort sein, der erst in Zukunft mit dem Fahrzeug erreicht wird. Dieser erst in Zukunft erreichte Ort kann dabei beispielsweise einem verwendeten Navigationssystem entnommen werden.

Zudem umfasst die Begrifflichkeit "Starter-Batterie" hier ausdrücklich jeden Energiespeicher für den Fahrzeug-Start, dessen Start-Energie bzw. Start-Leistung temperaturabhängig ist.

Konkret kann bei dem erfindungsgemäßen Verfahren mittels der Mess- und Steuereinrichtung beispielsweise, ermittelt werden, ob das Fahrzeug an dem voraussichtlichen zukünftigen Fahrzeug-Startzeitpunkt startfähig ist. Alternativ und/oder zusätzlich kann mittels der Mess- und Recheneinrichtung, insbesondere in Abhängigkeit von der Temperaturentwicklung, auch ermittelt werden, wie lange das Fahrzeug noch startfähig ist. Weiter alternativ und/oder zusätzlich kann mittels der Mess- und Steuereinrichtung, insbesondere in Abhängigkeit von der Temperaturentwicklung, ermittelt werden, in welchem zukünftigen Zeitintervall das Fahrzeug startfähig ist und/oder in welchem zukünftigen Zeitintervall das Fahrzeug nicht startfähig ist. Auf diese Weise können rechtzeitig die geeigneten Maßnahmen eingeleitet werden, die die Startbarkeit an dem voraussichtlichen zukünftigen Fahrzeug-Startzeitpunkt des Fahrzeuges sicherstellen.

In einer bevorzugten Verfahrensführung wird die örtliche Temperatur an dem voraussichtlichen zukünftigen Fahrzeug-Startzeitpunkt an dem voraussichtlichen zukünftigen Fahrzeug-Startort aus Wetterdaten und/oder aus temperaturrelevanten Fahrzeug-Startortdaten ermittelt. Die Wetterdaten können dabei beispielsweise über eine Internetverbindung oder über eine Funkverbindung von einer Wetterstation eingeholt werden. Bei den temperaturrelevanten Fahrzeug-Startortdaten kann es sich beispielsweise um ortsspezifische Erfahrungswerte oder ortsspezifische Gegebenheiten handeln, die einen besonderen Einfluss auf die Temperatur an dem voraussichtlichen Fahrzeug-Startort haben. Derartige Erfahrungswerte bzw. Gegebenheiten können beispielsweise der Temperaturunterschied innerorts und außerorts sowie wärmeabstrahlende oder temperaturglättende Umgebungseinflüsse, wie beispielsweise Fabrikanlagen oder Hallendächer, sein. Diese können beispielsweise bei einem erstmaligen Anfahren des Fahrzeug-Startorts erfasst und in der Mess- und Steuereinrichtung oder in einer zentralen Datenbank abgespeichert werden. Bei einem erneuten Anfahren dieses Fahrzeug-Startorts können die abgespeicherten Daten dann bei dem erfindungsgemäßen Verfahren verwendet werden.

Vorzugsweise werden bei der Ermittlung der Startbarkeit des Fahrzeuges Routenplanungsdaten und/oder Daten zu vorgeschriebenen Lenkzeiten und/oder Fahrerkartendaten und/oder aktuelle Standortdaten des Fahrzeuges und/oder die voraussichtliche Zeit bis zum Fahrzeug-Start und/oder der voraussichtliche Energiebedarf bei einem Fahrzeug-Start und/oder die, insbesondere, aktuell, abgegebene elektrische Leistung der Starter-Batterie und/oder weitere Starter-Komponenten, insbesondere wenigstens ein Starter-Kondensator, des Fahrzeuges berücksichtigt. Durch Berücksichtigung dieser Daten und/oder der weiteren für einen Fahrzeugstart wesentlichen Starter-Komponenten des Fahrzeuges kann die Startbarkeit des Fahrzeuges an dem voraussichtlichen zukünftigen Fahrzeug-Startzeitpunkt und voraussichtlichen zukünftigen Fahrzeug-Startort auf besonders einfache und zuverlässige Weise ermittelt werden. Die voraussichtliche Zeit bis zum Fahrzeug-Start kann dabei beispielsweise dadurch ermittelt werden, dass der Fahrer die voraussichtliche Abstellzeit des Fahrzeuges bis zu dem Fahrzeug-Startzeitpunkt in eine geeignete Eingabe-Einrichtung der Mess- und Steuereinrichtung eingibt. Ebenso kann die voraussichtliche Zeit bis zum Fahrzeug-Start mittels der Mess- und Steuereinrichtung auch selbsttätig ermittelt werden. Dies ist beispielsweise möglich, wenn das Fahrzeug einen Tachographen oder dergleichen aufweist und die Daten des Tachographen an die Mess- und Steuereinrichtung übermittelt werden. Bei der Ermittlung der abgegebenen elektrische Leistung der Starter-Batterie kann beispielsweise auch der vom Fahrer steuerbare Energieverbrauch, beispielsweise der Energieverbrauch durch Verwendung von Radio, Heizung oder Fernsehgerät, berücksichtigt werden.

Bevorzugt ist der wenigstens eine Batterie-Parameter der, insbesondere aktuelle, Batterie-Strom und/oder die, insbesondere aktuelle, Batterie-Spannung und/oder die, insbesondere aktuelle, Batterie-Temperatur. Mittels dieser Batterie-Parameter kann der Zustand der Starter-Batterie auf besonders einfache und aussagekräftige Weise ermittelt werden.

Besonders bevorzugt wird die Batterie-Temperatur an einem Anschlusselement zum Anschluss der Starter-Batterie an ein Bordnetz des Fahrzeuges, insbesondere an einer Batterieklemme, gemessen, um nützliche bzw. verwertbare Informationen über den Zustand der Starter-Batterie einzuholen. Die Batterie-Temperatur an dem Anschlusselement entspricht nämlich üblicherweise annähernd der Elektrolyttemperatur der Starter-Batterie.

Weiter bevorzugt wird dem Fahrer des Fahrzeuges mittels einer, insbesondere visuellen, Anzeigeeinrichtung wenigstens ein Signal, insbesondere ein Warnsignal und/oder ein Empfehlungssignal, bezüglich der ermittelten Startbarkeit des Fahrzeuges angezeigt, wobei bevorzugt vorgesehen ist, dass die Anzeigeeinrichtung ortsfest und/oder stationär an dem Fahrzeug festgelegt ist oder als mobiles Gerät ausgebildet ist. So können dem Fahrer des Fahrzeuges rechtzeitig wesentliche Informationen bezüglich der Startbarkeit des Fahrzeuges angezeigt werden. Der Fahrer des Fahrzeuges kann dann geeignete Maßnahmen einleiten, die die Startbarkeit des Fahrzeuges sicherstellen. Das mobile Gerät kann dabei beispielsweise auch als Mobiltelefon oder dergleichen ausgebildet sein.

Zur Lösung der bereits genannten Aufgabenstellung wird ferner ein Fahrerassistenzsystem für ein Fahrzeug, insbesondere für ein Nutzfahrzeug, vorgeschlagen, mit einer Mess- und Steuereinrichtung, mittels der wenigstens ein Batterie-Parameter einer Starter-Batterie des Fahrzeuges gemessen werden kann, und mittels der aus dem gemessenen Batterie-Parameter die Startbarkeit des Fahrzeuges ermittelt werden kann. Erfindungsgemäß ist die Mess- und Steuereinrichtung datenübertragend mit einer Prognostizier-Einrichtung gekoppelt, mittels der die örtliche Temperatur an einem voraussichtlichen zukünftigen Fahrzeug-Startzeitpunkt an einem voraussichtlichen zukünftigen Fahrzeug-Startort prognostiziert und/oder vorhergesehen werden kann.

Die sich für das Fahrerassistenzsystem und die sich auf das Fahrerassistenzsystem beziehenden Unteransprüche ergebenden Vorteile sind identisch mit den bereits gewürdigten Vorteilen des erfindungsgemäßen Verfahrens, so dass diese hier nicht wiederholt werden.

Zudem wird ein Fahrzeug, insbesondere ein Nutzfahrzeug, zur Durchführung des erfindungsgemäßen Verfahrens und/oder mit dem erfindungsgemäßen Fahrerassistenzsystem beansprucht. Die sich daraus ergebenden Vorteile werden hier ebenfalls nicht wiederholt.

Die vorstehenden erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer Darstellung von vorne ein Nutzfahrzeug mit dem erfindungsgemäßen Fahrerassistenzsystem;
- Fig. 2: eine Darstellung, anhand der die Funktionsweise des Fahrerassistenzsystems erläutert wird;
- Fig. 3: ein Diagramm, anhand dem beispielhaft eine Maßnahme zur Sicherstellung der Startbarkeit des Fahrzeuges erläutert wird; und
- Fig. 4: ein Diagramm, anhand dem eine Möglichkeit zur Verwendung des Fahrerassistenzsystems erläutert wird.

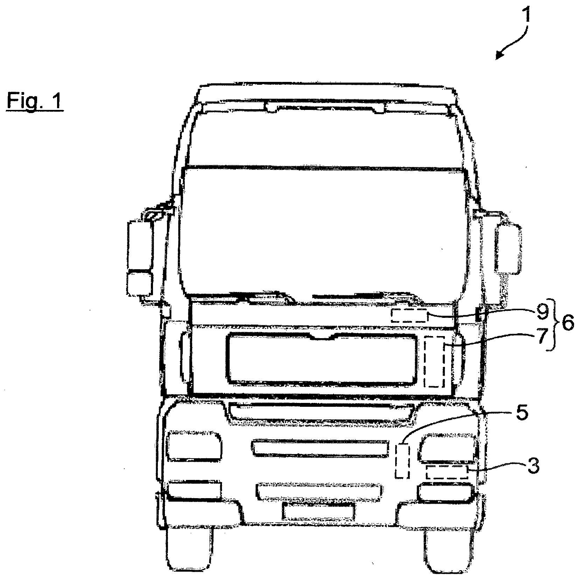

In Fig. 1 ist ein Nutzfahrzeug, hier beispielhaft ein Lastkraftwagen 1, in einer Ansicht von vorne gezeigt. Der Lastkraftwagen 1 weist eine mit gestrichelten Linien angedeutete Starter-Batterie 3 und einen Starter-Kondensator 5 auf, mittels denen der Lastkraftwagen 1 bzw. dessen Brennkraftmaschine gestartet werden kann. Zudem weist der Lastkraftwagen 1 ein Fahrerassistenzsystem 6 auf, von dem hier eine mit gestrichelten Linien angedeutete Mess- und Steuereinrichtung 7 und eine signalübertragend mit der Mess- und Steuereinrichtung 7 gekoppelte, mit gestrichelten Linien angedeutete Anzeigeeinrichtung, hier beispielhaft ein ortsfest festgelegter Bildschirm 9, gezeigt ist. Mittels der Mess- und Steuereinrichtung 7 wird hier beispielhaft ermittelt, ob der Lastkraftwagen 1 an einem voraussichtlichen zukünftigen Fahrzeug-Startzeitpunkt an einem voraussichtlichen zukünftigen Fahrzeug-Startort startfähig ist oder nicht. Alternativ oder zusätzlich kann mittels der Mess- und Steuereinrichtung 7 auch ermittelt werden, wie lange der Lastkraftwagen 1 voraussichtlich noch startfähig ist. Zudem kann mittels der Mess- und Steuereinrichtung 7 auch ermittelt werden, in welchem zukünftigen Zeitintervall der Lastkraftwagen 1 startfähig ist oder in welchem zukünftigen Zeitintervall der Lastkraftwagen 1 nicht startfähig ist. Nach Ermittlung dieser Informationen zur Startbarkeit des Lastkraftwagens 1 kann einem Fahrer des Lastkraftwagens 1 dann beispielsweise ein Warnsignal oder ein Empfehlungssignal bezüglich der ermittelten Startfähigkeit des Lastkraftwagens 1 am Bildschirm 9 angezeigt werden.

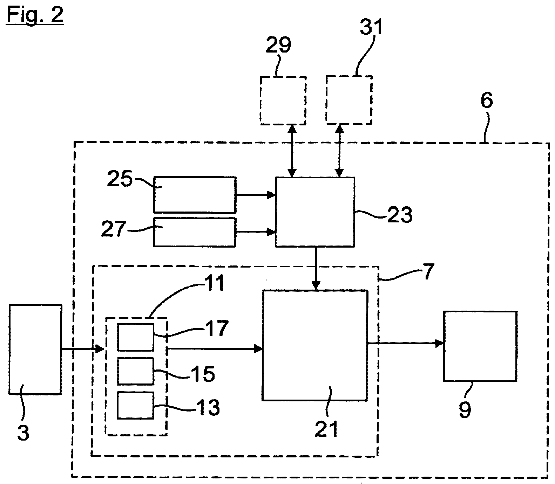

Die Funktionsweise des Fahrerassistenzsystems 6 wird nun im Folgenden anhand der Fig. 2 näher erläutert:
Wie in Fig. 2 gezeigt ist, weist die Mess- und Steuereinrichtung 7 eine Messeinrichtung 11 auf, mittels der mehrere Batterie-Parameter der Starter-Batterie 3 gemessen werden können. Die Messeinrichtung 11 umfasst, hier lediglich beispielhaft, einen Temperatur-Sensor 13, mittels dem die Temperatur der Starter-Batterie 3 gemessen wird. Bevorzugt ist der Temperatur-Sensor 13 beispielsweise als Thermoelement ausgebildet, das an einem Anschlusselement der Starter-Batterie 3 zum Anschluss der Starter-Batterie 3 an ein Bordnetz des Lastkraftwagens 1 festgelegt ist. Auf diese Weise kann die Temperatur der Starter-Batterie 3 an dem Anschlusselement der Starter-Batterie 3 gemessen werden. So können zuverlässige Aussagen über den Zustand bzw. über die Funktion der Starter-Batterie 3 gemacht werden, da die dort gemessene Temperatur üblicherweise einer Elektrolyttemperatur der Starter-Batterie 3 entspricht. Des Weiteren weist die Messeinrichtung 11 auch einen Strom-Sensor 15 auf, mittels dem der aktuelle Batterie-Strom der Starter-Batterie 3 gemessen wird. Zudem weist die Messeinrichtung 11 einen Spannungs-Sensor 17 auf. Mittels des Spannungs-Sensors 17 wird die aktuelle Batterie-Spannung der Starter-Batterie 3 gemessen. Mittels des aktuellen Batterie-Stroms und der aktuellen Batterie-Leistung kann dann die aktuelle Beanspruchung bzw. die aktuell abgegebene elektrische Leistung der Starter-Batterie 3 ermittelt werden. Durch die mittels der Messeinrichtung 11 gemessenen Batterie-Parameter kann der aktuelle Zustand der Starter-Batterie 3, insbesondere auch der Alterungszustand der Starter-Batterie 3 (State Of Health; SOH), auf einfache und zuverlässige Weise ermittelt werden.

Die Messeinrichtung 11 ist weiter mit einer Steuereinrichtung 21 der Mess- und Steuereinrichtung 7 datenübertragend gekoppelt, so dass die mittels der Messeinrichtung 11 gemessenen Batterie-Parameter an die Steuereinrichtung 21 übermittelt werden. Die Steuereinrichtung 21 ist zudem auch mit einer Prognostizier-Einrichtung 23 des Fahrerassistenzsystems 6 datenübertragend verbunden, mittels der die örtliche Temperatur an einem voraussichtlichen zukünftigen Fahrzeug-Startzeitpunkt und an einem voraussichtlichen zukünftigen Fahrzeug-Startort prognostiziert bzw. vorhergesehen werden kann. Zum Prognostizieren bzw. Vorhersagen dieser örtlichen Temperatur ist die Prognostizier-Einrichtung 23 hier beispielhaft mit einem Navigationssystem 25 des Lastkraftwagens 1, mit einer Eingabe-Einrichtung 27 des Lastkraftwagens 1, mit einer Wetterprognose-Einrichtung, hier beispielhaft eine mit gestrichelten Linien angedeutete Wetterstation 29, und mit einer temperaturrelevante Fahrzeug-Startortdaten aufweisenden, ebenfalls mit gestrichelten Linien angedeuteten Fahrzeug-Startortdaten-Einrichtung 31 datenübertragend verbunden.

Durch die Verbindung mit dem Navigationssystem 25 können Standort-Daten bezüglich des voraussichtlichen zukünftigen Fahrzeug-Startorts und, sofern der voraussichtliche zukünftige Fahrzeug-Startort noch nicht mit dem Lastkraftwagen 1 erreicht wurde, der voraussichtliche Zeitpunkt der Ankunft des Lastkraftwagens 1 an dem zukünftigen Fahrzeug-Startort an die Prognostizier-Einrichtung 23 übermittelt werden. Die Eingabe-Einrichtung 27 des Lastkraftwagens 1 wird durch den Fahrer des Lastkraftwagens 1 betätigt. In diese kann beispielsweise eingeben werden, wie lange der Lastkraftwagen 1 an dem voraussichtlichen zukünftigen Fahrzeug-Startort voraussichtlich abgestellt wird oder wann der Lastkraftwagen 1 voraussichtlich gestartet wird. Mittels der Daten des Navigationssystems 25 und der Eingabe-Einrichtung 27 kann die Prognostizier-Einrichtung 23 dann den voraussichtlichen zukünftigen Fahrzeug-Startzeitpunkt und den voraussichtlichen zukünftigen Fahrzeug-Startort ermitteln.

Über die datenübertragende Verbindung der Prognostizier-Einrichtung 23 zu der Wetterstation 29 und zu der Fahrzeug-Startortdaten-Einrichtung 31 können von der Prognostizier-Einrichtung 23 Informationen bezüglich der örtlichen Temperatur an dem ermittelten zukünftigen Fahrzeug-Startzeitpunkt an dem ermittelten zukünftigen Fahrzeug-Startort eingeholt und auf Basis dieser Informationen die voraussichtliche örtliche Temperatur prognostiziert bzw. vorhergesagt werden. Die datenübertragende Verbindung zwischen der Prognostizier-Einrichtung 23 und der Wetterstation 29 bzw. der Fahrzeug-Startortdaten-Einrichtung 31 kann dabei beispielsweise mittels einer geeigneten Funkverbindung oder einer Internetverbindung erfolgen. Bei den temperaturrelevanten Fahrzeug-Startortdaten der Fahrzeug-Startortdaten-Einrichtung 31 kann es sich weiter beispielsweise um ortsspezifische Erfahrungswerte oder ortsspezifische Gegebenheiten handeln, die einen besonderen Einfluss auf die Temperatur an dem voraussichtlichen Fahrzeug-Startort haben. Alternativ zu der Fahrzeug-Startortdaten-Einrichtung 31 können diese beispielsweise auch bei einem erstmaligen Anfahren des voraussichtlichen zukünftigen Fahrzeug-Startorts erfasst und in der Steuereinrichtung abgespeichert werden.

Die mittels der Prognostizier-Einrichtung 23 prognostizierte bzw. vorhergesehene örtliche Temperatur wird dann an die Steuereinrichtung 21 der Mess- und Steuereinrichtung 7 übermittelt. Auf Basis dieser Temperatur und der mittels der Messeinrichtung 11 gemessenen Batterie-Parameter der Starter-Batterie 3 kann dann, unter Berücksichtigung des voraussichtlichen Energiebedarfs beim Fahrzeug-Start und der mittels des Starter-Kondensators 5 einbringbaren Energie mittels der Steuereinrichtung 21 ermittelt werden, ob der Lastkraftwagen 1 an dem voraussichtlichen zukünftigen Fahrzeug-Startzeitpunkt an dem voraussichtlichen zukünftigen Fahrzeug-Startort startfähig ist oder nicht.

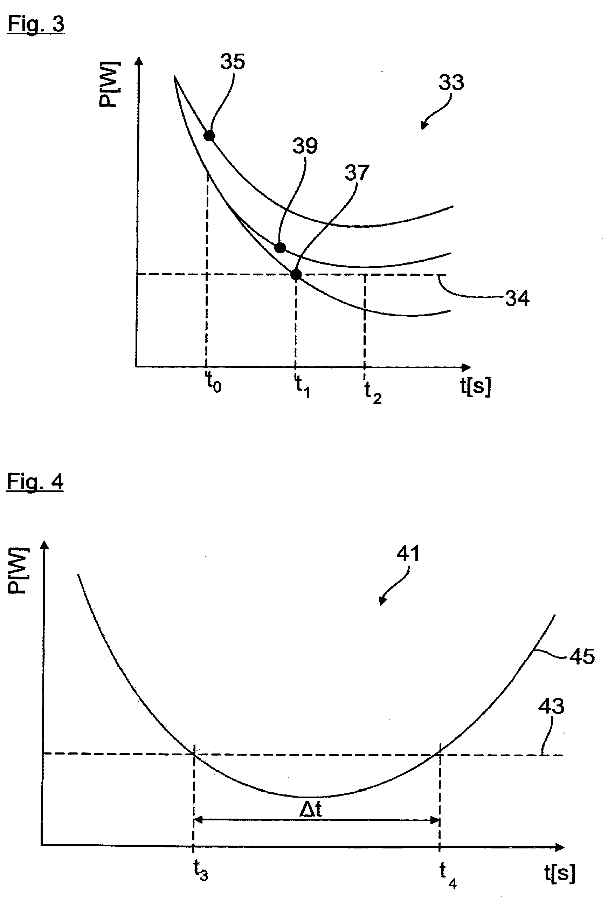

In Fig. 3 ist weiter ein Diagramm 33 gezeigt, das als Abszisse eine Zeit t und als Ordinate eine Leistung P aufweist. In dem Diagramm 33 ist zum einen eine Gerade 34 eingetragen, die den Mindest-Leistungsbedarf zum Starten des Lastkraftwagens 1 darstellt. Zudem sind in dem Diagramm 33 auch eine erste Kurve 35, eine zweite Kurve 37 und eine dritte Kurve 39 eingetragen, die die Leistung der Starter-Batterie 3 in Abhängigkeit von der Zeit t darstellen. Bei der ersten Kurve 35 ist dabei lediglich der Einfluss der Umgebungstemperatur auf die Batterie-Leistung berücksichtigt. Bei der zweiten Kurve 37 ist neben dem Einfluss der Umgebungstemperatur auch der Leistungsbedarf definierter, durchgehend eingeschalteter Energieverbraucher des Lastkraftwagens 1 auf die Batterie-Leistung berücksichtigt. Dabei wird ersichtlich, dass der Lastkraftwagen 1 bei durchgehend eingeschalteten Energieverbrauchern ab einem Zeitpunkt t₁ nicht mehr startbar ist, so dass der Lastkraftwagen 1 an einem eingeplanten, sich zeitlich nach dem Zeitpunkt t₁ befindenden Zeitpunkt t₂ nicht gestartet werden kann. Bei der dritten Kurve 39 ist ebenfalls neben dem Einfluss der Umgebungstemperatur der Leistungsbedarf der definierten Energieverbraucher des Lastkraftwagens 1 auf die Batterie-Leistung berücksichtigt. Jedoch werden hier zu einem sich zeitlich vor dem Zeitpunkt t₁ befindenden Zeitpunkt t₀ bereits Maßnahmen getroffen, die einen Start des Lastkraftwagens 1 zu dem Zeitpunkt t₂ ermöglichen. So werden hier beispielhaft zu dem Zeitpunkt t₀ einige der Energieverbraucher des Lastkraftwagens 1 abgeschaltet. Ebenso könnte für den Fall, dass der Lastkraftwagen 1 zu dem Zeitpunkt t₀ abgestellt ist, der Lastkraftwagen 1 zu dem Zeitpunkt t₀ auch kurz gestartet werden, um die Starter-Batterie 3 aufzuladen.

In Fig. 4 ist ein Diagramm 41 gezeigt, das ebenfalls als Abszisse eine Zeit t und als Ordinate eine Leistung P aufweist. In dem Diagramm 41 ist zum einen eine Gerade 43 eingetragen, die den Mindest-Leistungsbedarf zum Starten des Lastkraftwagens 1 darstellt. Zudem ist in dem Diagramm 41 auch eine Kurve 43 eingetragen, die die Leistung der Starter-Batterie 3 in Abhängigkeit von der Zeit t darstellen. Bei der Kurve 43 ist hier beispielhaft lediglich der Einfluss der Umgebungstemperatur auf die Batterie-Leistung berücksichtigt. Daraus wird ersichtlich, dass der Lastkraftwagen 1 in einem sich von einem Zeitpunkt t₃ bis zu einem Zeitpunkt t₄ erstreckenden Zeitintervall Δt nicht gestartet werden kann. Mittels der Mess- und Steuereinrichtung 7 können hier die Zeitpunkte t₃, t₄ und das Zeitintervall Δt ermittelt werden.

### Bezugszeichenliste

- 1: Lastkraftwagen
- 3: Starter-Batterie
- 5: Starter-Kondensator
- 6: Fahrerassistenzsystem
- 7: Mess- und Steuereinrichtung
- 9: Bildschirm
- 11: Messeinrichtung
- 13: Temperatur-Sensor
- 15: Strom-Sensor
- 17: Spannungs-Sensor
- 21: Steuereinrichtung
- 23: Prognostizier-Einrichtung
- 25: Navigationssystem
- 27: Eingabe-Einrichtung
- 29: Wetterstation
- 31: Fahrzeug-Startortdaten-Einrichtung
- 33: Diagramm
- 34: Gerade
- 35: erste Kurve
- 37: zweite Kurve
- 39: dritte Kurve
- 41: Diagramm
- 43: Gerade
- 45: Kurve
- t₀: Zeitpunkt
- t₁: Zeitpunkt
- t₂: Zeitpunkt
- t₃: Zeitpunkt
- t₄: Zeitpunkt
- Δt: Zeitintervall

## Patentansprüche

1. Verfahren zur Unterstützung eines Fahrers eines Fahrzeuges, insbesondere eines Nutzfahrzeuges, mit einer Mess- und Steuereinrichtung (7), mittels der wenigstens ein Batterie-Parameter einer Starter-Batterie (3) des Fahrzeuges (1) gemessen wird, und mittels der aus dem gemessenen Batterie-Parameter die Startbarkeit des Fahrzeuges (1) ermittelt wird, **dadurch gekennzeichnet, dass** bei der Ermittlung der Startbarkeit des Fahrzeuges (1) die örtliche Temperatur an einem voraussichtlichen zukünftigen Fahrzeug-Startzeitpunkt an einem voraussichtlichen zukünftigen Fahrzeug-Startort berücksichtigt wird.

2. Verfahren nach Anspruch 1, **dadurch gekennzeichnet, dass** mittels der Mess- und Steuereinrichtung (7) ermittelt wird, ob das Fahrzeug an dem voraussichtlichen zukünftigen Fahrzeug-Startzeitpunkt startfähig ist, und/oder dass mittels der Mess- und Steuereinrichtung (7), insbesondere in Abhängigkeit von der Temperaturentwicklung, ermittelt wird, wie lange das Fahrzeug (1) noch startfähig ist, und/oder dass mittels der Mess- und Steuereinrichtung (7), insbesondere in Abhängigkeit von der Temperaturentwicklung, ermittelt wird, in welchem zukünftigen Zeitintervall (Δt) das Fahrzeug (1) startfähig ist und/oder in welchem zukünftigen Zeitintervall (Δt) das Fahrzeug (1) nicht startfähig ist.

3. Verfahren nach Anspruch 1 oder 2, **dadurch gekennzeichnet, dass** die örtliche Temperatur an dem voraussichtlichen zukünftigen Fahrzeug-Startzeitpunkt an dem voraussichtlichen zukünftigen Fahrzeug-Startort aus Wetterdaten und/oder aus temperaturrelevanten Fahrzeug-Startortdaten ermittelt wird.

4. Verfahren nach einem der vorhergehenden Ansprüche, **dadurch gekennzeichnet, dass** bei der Ermittlung der Startbarkeit des Fahrzeuges (1) Routenplanungsdaten und/oder , Daten zu vorgeschriebenen Lenkzeiten und/oder Fahrerkartendaten und/oder aktuelle Standortdaten des Fahrzeuges (1) und/oder die voraussichtliche Zeit bis zum Fahrzeug-Start und/oder der voraussichtliche Energiebedarf beim Fahrzeug-Start und/oder die, insbesondere aktuell, abgegebene elektrische Leistung der Starter-Batterie (3) und/oder weitere Starter-Komponenten (5), insbesondere wenigstens ein Starter-Kondensator, des Fahrzeuges (1) berücksichtigt werden.

5. Verfahren nach einem der vorhergehenden Ansprüche, **dadurch gekennzeichnet, dass** der wenigstens eine Batterie-Parameter der, insbesondere aktuelle, Batterie-Strom und/oder die, insbesondere aktuelle, Batterie-Spannung und/oder die, insbesondere aktuelle, Batterie-Temperatur ist.

6. Verfahren nach Anspruch 5, **dadurch gekennzeichnet, dass** die Batterie-Temperatur an einem Anschlusselement zum Anschluss der Starter-Batterie (3) an ein Bordnetz des Fahrzeuges (1), insbesondere an einer Batterieklemme, gemessen wird.

7. Verfahren nach einem der vorhergehenden Ansprüche, **dadurch gekennzeichnet, dass** dem Fahrer mittels wenigstens einer, insbesondere visuellen, Anzeigeeinrichtung (9) wenigstens ein Signal, insbesondere ein Warnsignal und/oder ein Empfehlungssignal, bezüglich der ermittelten Startbarkeit des Fahrzeuges (1) angezeigt wird, wobei bevorzugt vorgesehen ist, dass die Anzeigeeinrichtung (9) ortsfest und/oder stationär an dem Fahrzeug festgelegt ist oder als mobiles Gerät ausgebildet ist.

8. Fahrerassistenzsystem für ein Fahrzeug, insbesondere für ein Nutzfahrzeug und/oder zur Durchführung eines Verfahrens nach einem der vorhergehenden Ansprüche, mit einer Mess- und Steuereinrichtung (7), mittels der wenigstens ein Batterie-Parameter einer Starter-Batterie (3) des Fahrzeuges (1) messbar ist, und mittels der aus dem gemessenen Batterie-Parameter die Startbarkeit des Fahrzeuges (1) ermittelbar ist, **dadurch gekennzeichnet, dass** die Mess- und Steuereinrichtung (7) datenübertragend mit einer Prognostiziereinrichtung (23) gekoppelt ist, mittels der die örtliche Temperatur an einem voraussichtlichen zukünftigen Fahrzeug-Startzeitpunkt und an einem voraussichtlichen zukünftigen Fahrzeug-Startort prognostizierbar und/oder vorhersehbar ist.

9. Fahrerassistenzsystem nach Anspruch 8, **dadurch gekennzeichnet, dass** die Prognostizier-Einrichtung (23) datenübertragend mit einer Wetterprognose-Einrichtung (29) gekoppelt ist, und/oder dass die Prognostizier-Einrichtung (23) datenübertragend mit einer temperaturrelevante Fahrzeug-Startortdaten aufweisenden Fahrzeug-Startortdaten-Einrichtung (31) gekoppelt ist.

10. Fahrerassistenzsystem nach Anspruch 8 oder 9, **dadurch gekennzeichnet, dass** die Mess- und Steuereinrichtung (7) ein Standortbestimm-System aufweist oder mit einem derartigen System gekoppelt ist, und/oder dass die Mess- und Steuereinrichtung ein Navigationssystem (25) aufweist oder mit einem derartigen System gekoppelt ist, und/oder dass die Mess- und Steuereinrichtung eine Eingabe-Einrichtung (27) zur Eingabe der voraussichtlichen Zeit bis zum Fahrzeug-Start aufweist oder mit einer derartigen Einrichtung gekoppelt ist.

11. Fahrerassistenzsystem nach einem der Ansprüche 8 bis 10, **dadurch gekennzeichnet, dass** die Mess- und Steuereinrichtung (7) wenigstens einen Temperatur-Sensor (13) aufweist, mittels dem die Temperatur der Starter-Batterie (3) als Batterie-Parameter messbar ist, wobei bevorzugt vorgesehen ist, dass der Temperatur-Sensor (13) einem Anschlusselement zum Anschluss der Starter-Batterie (3) an ein Bordnetz des Fahrzeuges (1), insbesondere einer Batterieklemme, zugeordnet ist.

12. Fahrerassistenzsystem nach einem der Ansprüche 8 bis 11, **dadurch gekennzeichnet, dass** die Mess- und Steuereinrichtung (7) wenigstens einen Strom-Sensor (15) aufweist, mittels dem der Batterie-Strom als Batterie-Parameter messbar ist, und/oder, dass die Mess- und Steuereinrichtung (7) wenigstens einen Spannungs-Sensor (17) aufweist, mittels dem die Batterie-Spannung als Batterie-Parameter messbar ist.

13. Fahrerassistenzsystem nach einem der Ansprüche 8 bis 12, **dadurch gekennzeichnet, dass** wenigstens eine, insbesondere visuelle, Anzeigeeinrichtung (9) vorgesehen ist, mittels der wenigstens ein Signal, insbesondere ein Warnsignal und/oder ein Empfehlungssignal, bezüglich der ermittelten Startbarkeit des Fahrzeuges (1) anzeigbar ist, wobei bevorzugt vorgesehen ist, dass die Anzeigeeinrichtung (9) ortsfest und/oder stationär an dem Fahrzeug festgelegt ist oder als mobiles Gerät ausgebildet ist.

14. Fahrzeug, insbesondere Nutzfahrzeug, zur Durchführung eines Verfahrens nach einem der Ansprüche 1 bis 7 und/oder mit einem Fahrerassistenzsystem nach einem der Ansprüche 8 bis 13.

## Claims

1. Method for assisting a driver of a vehicle, in particular a utility vehicle, having a measuring and control device (7) by means of which at least one battery parameter of a starter battery (3) of the vehicle (1) is measured and by means of which the starting capability of the vehicle (1) is determined from the measured battery parameter, **characterized in that** during the determination of the starting capability of the vehicle (1) the local temperature at an anticipated future vehicle starting time and at an anticipated future vehicle starting location is taken into account.

2. Method according to Claim 1, **characterized in that** by means of the measuring and control device (7) it is determined whether the vehicle is capable of starting at the anticipated future vehicle starting time, and/or in that by means of the measuring and control device (7) it is determined, in particular as a function of the temperature development, for how long the vehicle (1) will still be capable of starting, and/or **in that** by means of the measuring and control device (7) it is determined, in particular as a function of the temperature development, in which future time interval (Δt) the vehicle (1) will be capable of starting and/or in which future time interval (Δt) the vehicle (1) will not be capable of starting.

3. Method according to Claim 1 or 2, **characterized in that** the local temperature at the anticipated future vehicle starting time and at the anticipated future vehicle starting location is determined from weather data and/or from temperature-relevant vehicle starting location data.

4. Method according to one of the preceding claims, **characterized in that** route planning data and/or data relating to prescribed steering times and/or driver's map data and/or current location data of the vehicle (1) and/or the anticipated time to the vehicle start and/or the anticipated energy requirement when the vehicle starts and/or the, in particular currently, output electrical power of the starter battery (3) and/or further starting components (5), in particular at least one starter capacitor of the vehicle (1), are taken into account in the determination of the starting capability of the vehicle (1).

5. Method according to one of the preceding claims, **characterized in that** the at least one battery parameter is the, in particular present, battery current and/or the, in particular present, battery voltage and/or the, in particular present, battery temperature.

6. Method according to Claim 5, **characterized in that** the battery temperature is measured at a connecting element for connecting the starter battery (3) to an on-board power system of the vehicle (1), in particular at a battery terminal.

7. Method according to one of the preceding claims, **characterized in that** at least one signal, in particular a warning signal and/or a recommendation signal, relating to the determined starting capability of the vehicle (1) is displayed to the driver by means of at least one, in particular visual, display device (9), wherein there is preferably provision that the display device (9) is secured in a positionally fixed and/or stationary fashion to the vehicle or is embodied as a mobile device.

8. Driver assistance system for a vehicle, in particular for a utility vehicle and/or for carrying out a method according to one of the preceding claims, having a measuring and control device (7) by means of which at least one battery parameter of a starter battery (3) of the vehicle (1) can be measured and by means of which the starting capability of the vehicle (1) can be determined from the measured battery parameter, **characterized in that** the measuring and control device (7) is coupled in a data-transmitting fashion to a prediction device (23) by means of which the local temperature at an anticipated future vehicle starting time and at an anticipated future vehicle starting location can be predicted and/or anticipated.

9. Driver assistance system according to Claim 8, **characterized in that** the prediction device (23) is coupled in a data-transmitting fashion to a weather prediction device (29), and/or **in that** the prediction device (23) is coupled in a data-transmitting fashion to a temperature-relevant vehicle location data device (31) which has vehicle location data.

10. Driver assistance system according to Claim 8 or 9, **characterized in that** the measuring and control device (7) has a location-determining system or is coupled to such a system, and/or **in that** the measuring and control device has a navigation system (25) or is coupled to such a system, and/or **in that** the measuring and control device has an input device (27) for inputting the anticipated time until the vehicle start or is coupled to such a device.

11. Driver assistance system according to one of Claims 8 to 10, **characterized in that** the measuring and control device (7) has at least one temperature sensor (13) by means of which the temperature of the starter battery (3) can be measured as a battery parameter, wherein there is preferably provision for the temperature sensor (13) to be assigned to a connecting element for connecting the starter battery (3) to an on-board power system of the vehicle (1), in particular to a battery terminal.

12. Driver assistance system according to one of Claims 8 to 11, **characterized in that** the measuring and control device (7) has at least one current sensor (15) by means of which the battery current can be measured as a battery parameter, and/or **in that** the measuring and control device (7) has at least one voltage sensor (17) by means of which the battery voltage can be measured as a battery parameter.

13. Driver assistance system according to one of Claims 8 to 12, **characterized in that** at least one, in particular visual, display device (9) is provided, by means of which at least one signal, in particular a warning signal and/or a recommendation signal, relating to the determined starting capability of the vehicle (1) can be displayed, wherein there is preferably provision that the display device (9) is secured in a positionally fixed and/or stationary fashion to the vehicle or is embodied as a mobile device.

14. Vehicle, in particular a utility vehicle, for carrying out a method according to one of Claims 1 to 7 and/or having a driver assistance system according to one of Claims 8 to 13.

## Revendications

1. Procédé d'assistance d'un conducteur d'un véhicule, notamment d'un véhicule utilitaire, avec un dispositif de mesure et de commande (7) au moyen duquel au moins un paramètre de la batterie d'une batterie de démarrage (3) du véhicule (1) est mesuré et au moyen duquel, à partir du paramètre de la batterie mesuré, l'aptitude au démarrage du véhicule (1) est déterminée, **caractérisé en ce que** lors de la détermination de l'aptitude au démarrage du véhicule (1), la température locale à un moment futur prévisible de démarrage du véhicule en un lieu futur prévisible de démarrage du véhicule est pris en considération.

2. Procédé selon la revendication 1, **caractérisé en ce qu'**au moyen du dispositif de mesure et de commande (7), il est déterminé si le véhicule est apte au démarrage au moment futur prévisible de démarrage du véhicule et/ou **en ce qu'**au moyen du dispositif de mesure et de commande (7), il est déterminé, notamment en fonction du développement de la température combien de temps le véhicule (1) est encore apte au démarrage et/ou **en ce qu'**au moyen du dispositif de mesure et de commande (7), il est déterminé, notamment en fonction du développement de la température dans quel intervalle de temps futur (Δt) le véhicule (1) est apte au démarrage et/ou dans quel intervalle de temps futur (Δt) le véhicule (1) n'est pas apte au démarrage.

3. Procédé selon la revendication 1 ou 2, **caractérisé en ce que** la température locale au moment futur prévisible de démarrage du véhicule, au lieu futur prévisible de démarrage du véhicule est déterminée à partir de données météorologiques et/ou à partir de données déterminantes en matière de température au lieu de démarrage du véhicule.

4. Procédé selon l'une quelconque des revendications précédentes, **caractérisé en ce que** lors de la détermination de l'aptitude au démarrage du véhicule (1), des données de planification d'itinéraire et/ou des données concernant la position actuelle du véhicule (1) et/ou la durée prévisible jusqu'au démarrage du véhicule et/ou le besoin d'énergie prévisible lors du démarrage du véhicule et/ou le puissance électrique restituée, notamment actuelle par la batterie de démarrage (3) et/ou des composants de démarrage (5) supplémentaires, notamment un condensateur de démarrage du véhicule (1) sont pris en considération.

5. Procédé selon l'une quelconque des revendications précédentes, **caractérisé en ce que** l'au moins un paramètre de la batterie est le courant de la batterie, notamment actuel et/ou la tension de la batterie, notamment actuelle et/ou la température de la batterie, notamment actuelle.

6. Procédé selon la revendication 5, **caractérisé en ce que** la température de la batterie est mesurée sur un élément de raccordement destiné à raccorder la batterie de démarrage (3) sur un réseau de bord du véhicule (1), notamment sur une borne de la batterie.

7. Procédé selon l'une quelconque des revendications précédentes, **caractérisé en ce qu'**au moyen d'un dispositif d'affichage (9), notamment visuel, il est délivré au conducteur au moins un signal, notamment un signal d'avertissement et/ou un signal de recommandation concernant l'aptitude au démarrage déterminée du véhicule (1), sachant qu'il est prévu de préférence que le dispositif d'affichage (9) soit immobilisé de manière fixe et/ou stationnaire sur le véhicule ou soit conçu sous la forme d'un appareil mobile.

8. Système d'assistance du conducteur pour un véhicule, notamment pour un véhicule utilitaire, avec un dispositif de mesure et de commande (7) au moyen duquel au moins un paramètre de la batterie d'une batterie de démarrage (3) du véhicule (1) est mesurable et au moyen duquel, à partir du paramètre de la batterie mesuré, l'aptitude au démarrage du véhicule (1) peut être déterminée, **caractérisé en ce que** le dispositif de mesure et de commande (7) est accouplé de manière à transmettre des données avec un dispositif de pronostics (23), au moyen duquel la température locale à un moment futur prévisible de démarrage du véhicule et en un lieu futur prévisible de démarrage du véhicule peut être pronostiquée et/ou prévue.

9. Système d'assistance du conducteur selon la revendication 8, **caractérisé en ce que** le dispositif de pronostics (23) est accouplé de manière à transmettre des données avec un dispositif de pronostics météorologiques (29) et/ou **en ce que** le dispositif de pronostics (23) est accouplé de manière à transmettre des données avec un système de données de démarrage (31) du véhicule, présentant des données déterminantes en matière de température de démarrage du véhicule.

10. Système d'assistance du conducteur selon la revendication 8 ou 9, **caractérisé en ce que** le dispositif de mesure et de commande (7) comporte un système de détermination de position ou est accouplé avec un tel système et/ou **en ce que** le dispositif de mesure et de commande comporte un système de navigation (25) ou est accouplé avec un tel système et/ou **en ce que** le dispositif de mesure et de commande comporte un dispositif de saisie (27), destiné à saisir la durée prévisible jusqu'au démarrage du véhicule ou est accouplé avec un tel système.

11. Système d'assistance du conducteur selon l'une quelconque des revendications 8 à 10, **caractérisé en ce que** le dispositif de mesure et de commande (7) comporte au moins un capteur de température (13) au moyen duquel la température de la batterie de démarrage (3) est mesurable en tant que paramètre de la batterie, sachant qu'il est prévu de préférence que le capteur de température (13) soit associé à un élément de raccordement destiné à raccorder la batterie de démarrage (3) à un réseau de bord du véhicule (1), notamment à une borne de batterie.

12. Système d'assistance du conducteur selon l'une quelconque des revendications 8 à 11, **caractérisé en ce que** le dispositif de mesure et de commande (7) comporte au moins un capteur de courant (15), au moyen duquel le courant de la batterie est mesurable en tant que paramètre de la batterie et/ou **en ce que** le dispositif de mesure et de commande (7) comporte au moins un capteur de tension (17) au moyen duquel la tension de la batterie est mesurable en tant que paramètre de la batterie.

13. Système d'assistance du conducteur selon l'une quelconque des revendications 8 à 12, **caractérisé en ce qu'**il est prévu au moins un dispositif d'affichage (9), notamment visuel, au moyen de laquelle au moins un signal, notamment un signal d'avertissement et/ou un signal de recommandation concernant l'aptitude au démarrage déterminée du véhicule (1) est affichable, sachant qu'il est prévu de préférence que le dispositif d'affichage (9) soit immobilisé de manière fixe et/ou stationnaire sur le véhicule ou soit conçu sous la forme d'un appareil mobile.

14. Véhicule, notamment véhicule utilitaire destiné à réaliser un procédé selon l'une quelconque des revendications 1 à 7 et/ou avec un système d'assistance du conducteur selon l'une quelconque des revendications 8 à 13.
